## Europäisches Patentamt

## European Patent Office

## Office européen des brevets

(11) Veröffentlichungsnummer: **0 092 069**
**A1**

(12) **EUROPÄISCHE PATENTANMELDUNG**

(21) Anmeldenummer: 83103033.3

(22) Anmeldetag: 26.03.83

(51) Int. Cl.³: **A 01 B 11/00**

(30) Priorität: 20.04.82 DE 3214438

(43) Veröffentlichungstag der Anmeldung: 26.10.83
Patentblatt 83/43

(84) Benannte Vertragsstaaten: **AT BE CH FR GB IT LI LU NL SE**

(71) Anmelder: **Melchior, Josef Bernhard, Höhenstrasse 12, D-6696 Nonnweiler-Schwarzenbach (DE)**

(72) Erfinder: **Melchior, Josef Bernhard, Höhenstrasse 12, D-6696 Nonnweiler-Schwarzenbach (DE)**

(74) Vertreter: **Boecker, Carl Otto, Dipl.-Ing., Ensheimer Strasse 48, D-6670 St.Ingbert (DE)**

(54) Bodenbearbeitungsgerät zum Anschluss an eine Zugmaschine.

㉗ Bodenbearbeitungsgerät zum Anschluß an eine Zugmaschine, die mit einer hinteren Zapfwelle zum Antrieb von Zusatzgeräten eingerichtet ist, wobei auf dem Gestell (10a) des Bodenbearbeitungsgerätes (10) eine von der Zapfwelle der Zugmaschine über eine Steckkupplung (7) angetriebene Welle (4) starr gelagert ist, die am hinteren Ende mit einer fliegend angeordneten Unwucht (6) versehen ist, um das Bodenbearbeitungsgerät (10) in Vibration zu versetzen. Die fliegende Anordnung der Unwucht (6) ermöglicht es, die Unwuchtmasse leicht zu ändern.

EP 0 092 069 A1

- 1 -

Bodenbearbeitungsgerät zum Anschluß an eine Zugmaschine

Die Erfindung betrifft ein Bodenbearbeitungsgerät mit einer Relativbewegungen gegenüber dem Boden erlaubenden Aufhängung zum Anschluß an eine Zugmaschine, die eine hintere Zapfwelle zum Antrieb von Zusatzgeräten aufweist. Bodenbearbeitungsgeräte wie Pflüge, Grubber, Eggen, Walzen oder dgl. erfordern als Schleppgeräte eine gewisse Zugleistung der Zugmaschine, die beträchtlich ist, insbesondere wenn es sich um schweren, feuchten Boden handelt. Es ist bekannt (DE-A-19 44 658), an die Zapfwelle der Zugmaschine über eine lösbare Kupplung eine mit einer Unwucht versehene Welle anzuschließen, die an einem das oder die Bodenbearbeitungswerkzeuge tragenden Traggestell des Bodenbearbeitungsgerätes gelagert ist. Die hierdurch dem oder den Bodenbearbeitungswerkzeugen vermittelten Vibrationen aus der umlaufenden Unwucht sollen den Zugkraftbedarf der Zugmaschine verringern.

Es ist ferner bekannt, von der Zapfwelle der Zugmaschine aus über eine Teleskop-Gelenkspindel eine Kurbelwelle anzutreiben, deren Kurbel über eine Schubstange mit dem hinteren Teil einer schwingbeweglich aufgehängten Pflugschar angeschlossen ist, um die Pflugschar unabhängig von dem Traggestell des Bodenbearbeitungsgerätes in Schwingungen zu versetzen (DE-C 922 259).

Die Erfindung geht von einem Bodenbearbeitungsgerät mit

0092069

einer am Traggestell für das oder die Bodenbearbeitungswerkzeuge gelagerten Unwuchtwelle nach der DE-A-19 44 658 aus. Bei diesem Bodenbearbeitungsgerät sind zwei entgegengesetzt umlaufende Unwuchten vorgesehen, und die Unwuchtwelle ist relativ zum Traggestell in vertikaler Ebene auf verschiedene Schwenklagen einstellbar, um die Wirkungsrichtung des Unwuchtpaares auf den Widerstandsschwerpunkt des Bodenbearbeitungswerkzeuges auszurichten. Der Erfindung liegt ebenfalls die Aufgabe zugrunde, die Intensität der dem oder den Bodenbearbeitungswerkzeugen mitgeteilten Vibrationen den Bodenverhältnissen anpassen zu können, jedoch soll dabei sichergestellt sein, daß die von einer umlaufenden Unwucht erzeugten Vibrationen unmittelbar und unter Ausschluß von zusätzlichen, spielbehafteten Schwenklagern und Klemmbefestigungen auf das Traggestell des Bodenbearbeitungsgerätes übertragen werden.

Die Lösung dieser Aufgabe besteht gemäß der Erfindung darin, daß die Unwuchtwelle in zwei mit dem Traggestell verbundenen Lagern starr gelagert und die Unwucht am hinteren Ende der Welle fliegend angeordnet ist. Die fliegende Anordnung der Unwucht erlaubt es, die Unwuchtmasse leicht zu verändern, sei es durch Anschrauben von Scheiben oder durch Auswechseln der gesamten Unwucht. Die fliegende Anordnung der Unwucht hat aber auch eine vorteilhafte Wirkung insofern, als der den Unwuchtkräften zugeordnete Hebelarm, der bis zur Aufhängung des Bodenbearbeitungsgerätes an der Zugmaschine reicht, optimiert ist, so daß die Unwuchtmasse zur Schonung der Lager klein gehalten werden kann.

Wegen der starren Lagerung der Unwuchtwelle am Traggestell empfiehlt es sich, dem Kuppelende der Unwuchtwelle ein Kardangelenk zuzuordnen, wenn nicht bereits die Zapfwelle der Zugmaschine mit einem solchen Gelenk versehen ist.

Die Erfindung ist bei Bodenbearbeitungsgeräten im weitesten Sinne anwendbar, d.h. auch für Nachlaufgeräte zum Verdichten oder Planieren des Bodens, beispielsweise von Sportplätzen. So ist es empfehlenswert, eine Schiene als Nachlaufgerät mit einem Gestell zur Lagerung der Unwuchtwelle als Nachlaufgerät zu konzipieren, die in glatter Ausführung als "Vibroschiene" der Bodenverdichtung oder dem Planieren dient. In gezahnter Ausführung ist die Vibroschiene als Schollenbrecher für den Acker anwendbar. Die Vibroschiene kann auch an ein Bodenbearbeitungsgerät mit Tiefenmeißel, d.h. an einen Grubber angehängt werden.

In der Zeichnung sind einige Ausführungsbeispiele von Bodenbearbeitungsgeräten gemäß der Erfindung dargestellt, und zwar zeigen

Fig. 1    eine sogenannte Saatbeetkombination als Bodenbearbeitungsgerät mit angedeuteter Zugmaschine,

Fig. 2    einen Schwergrubber und

Fig. 3    einen Weinberggrubber.

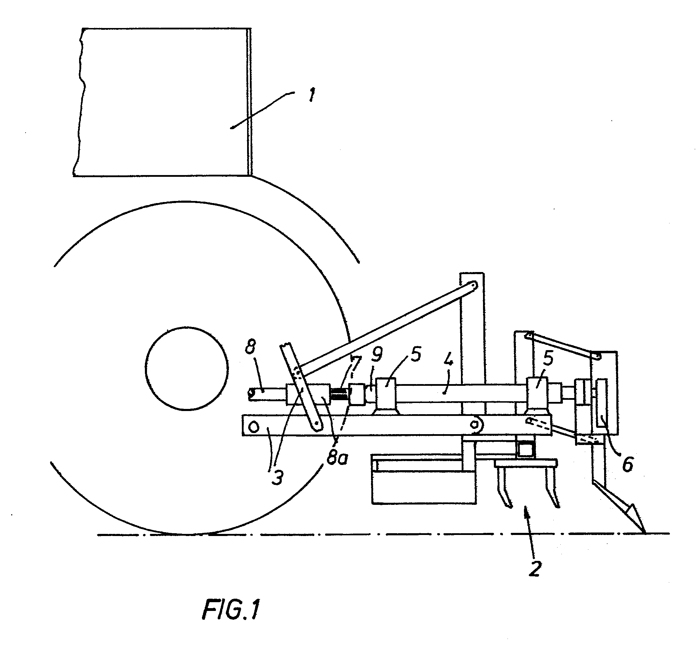

In Fig. 1 erkennt man das hintere Ende einer Zugmaschine 1, an die die schematisch dargestellte Saatbeetkombination 2 mittels der Aufhängungsgestänge 3 in nicht näher dargestellter Weise zum Schleppbetrieb angeschlossen ist. In diesem Bodenbearbeitungsgerät ist eine waagerechte Welle 4 in Lagern 5 fest gelagert, die am hinteren Ende mit einer fliegend angeordneten Unwucht 6 versehen ist. Die Welle 4 hat ein Kuppelende 7, das mit einer Vielnutverzahnung versehen ist und zur Herstellung einer drehfesten Steckverbindung in eine entsprechend innen verzahnte Kuppelhülse 8a der Zapfwelle 8 der Zugmaschine 1 einsteckbar ist, wodurch die Unwuchtwelle 4 unabhängig von den Fahrbewegungen des Gerätes angetrieben ist, um das Gerät in Vibrationen zu versetzen. Die Bodenbearbeitung wird hierdurch erleichtert, so daß die von der Zugmaschine aufzubringende Zugleistung verringert wird. Dem Kuppelende 7 der Unwuchtwelle 4 ist außerhalb der Lager 5 ein Kardangelenk 9 zugeordnet, das erforderlich ist, wenn die Zapfwelle 8 der Zugmaschine starr gelagert ist. Dieses Kardangelenk 9 ist nicht nur wegen der dem Gerät aufgezwungenen Vibrationen notwendig, sondern auch wegen der möglichen Freiheitsgrade des Gerätes 2 gegenüber der Zugmaschine 1 aufgrund der Aufhängungsgestänge 3. Im übrigen sollte das Axialspiel zwischen dem Kuppelende 7 und der Kuppelhülse 8a so groß sein, daß die durch die Aufhängung möglichen Entfernungs- änderungen zwischen dem Gerät und der Zugmaschine nicht dazu führen, daß das Kuppelende 7 aus der Kuppelhülse 8a austritt. Im übrigen ist die Eingriffslänge des Kuppelendes 7, also die Eingriffslänge der Steckverbindung, so bemessen, daß zunächst das Kuppelende 7 in die Kuppelhülse 8a eingeführt und danach der Anschluß des Gerätes an die Zugmaschine mittels der Aufhängungsgestänge 3 vollzogen wird.

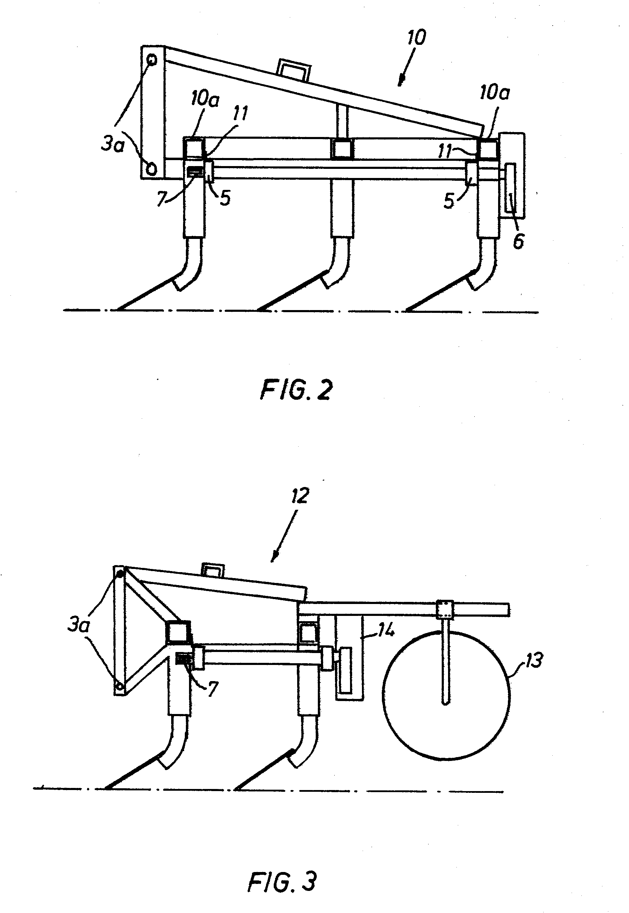

In Fig. 2 ist ein Schwergrubber 10 dargestellt, bei dem deutlicher als in Fig. 1 die Befestigung der Lager 5 für die Unwuchtwelle 4 an Querholmen 10a dargestellt ist. Die Lager 5 sind über Winkelstücke 11 mit dem Gestell des Gerätes verbunden. Dem vielverzahnten Kuppelende 7 der Unwuchtwelle 4 ist in diesem Ausführungsbeispiel kein Kardangelenk zugeordnet, da normalerweise die Zapfwelle 8 (Fig. 1) der Zugmaschine mit einem Gelenk versehen ist. An dem Gestell des Gerätes 10 nach Fig. 2 erkennt man im vorderen Bereich Bohrungen 3a zum Anschluß von Aufhängungsgestängeteilen in der Art von Parallelogrammlenkern oder dergleichen.

Das Ausführungsbeispiel nach Fig. 3 zeigt einen Weinberggrubber 12 mit einem hinteren Stützrad 13. Auch hierbei ist dem vielverzahnten Kuppelende 7 kein Kardangelenk zugeordnet. Die Unwucht 6 ist wie bei allen anderen Ausführungsbeispielen durch ein Gehäuse 14 geschützt. Ihre fliegende Anordnung am hinteren Ende der Unwuchtwelle 4 hat zur Folge, daß die Unwuchtkräfte unter einem maximalen Hebelarm gegenüber der Aufhängung 3 bzw. 3a wirksam sind und die Unwuchtmasse wegen der freien Zugänglichkeit der Unwucht 6 leicht verändert werden kann.

Patentansprüche

1. Bodenbearbeitungsgerät mit einer Relativbewegungen gegenüber dem Boden erlaubenden Aufhängung (3) zum Anschluß an eine Zugmaschine (1), die eine hintere Zapfwelle (8) zum Antrieb von Zusatzgeräten aufweist, an die über eine lösbare Kupplung eine mit einer Unwucht (6) versehene Welle (4) anschließbar ist, die an einem das oder die Bodenbearbeitungswerkzeuge (2) tragenden Traggestell des Bodenbearbeitungsgerätes gelagert ist,
dadurch gekennzeichnet, daß die Unwuchtwelle (4) in zwei mit dem Traggestell (10a) verbundenen Lagern (5) starr gelagert und die Unwucht (6) am hinteren Ende der Welle fliegend angeordnet ist.

2. Bodenbearbeitungsgerät nach Anspruch 1, dadurch gekennzeichnet, daß dem Kuppelende (7) der Unwuchtwelle (4) ein Kardangelenk (9) zugeordnet ist.

FIG.1

FIG.2

FIG.3

Europäisches
Patentamt

**EUROPÄISCHER RECHERCHENBERICHT**

0092069

Nummer der Anmeldung

EP 83 10 3033

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-3 103 250 (L.F. LAMB) * Spalte 1, Zeile 69 - Spalte 2, Zeile 18; Figuren 1-5 * | 1,2 | A 01 B 11/00 |
| X | AU-A- 56 493 (G.F. PRITCHARD) * Seite 2, Zeilen 14-23; Figuren 1-3 * | 1 | |
| A | DE-A-2 726 966 (TEXAS INDUSTRIES INC.) * Seite 15, letzter Absatz - Seite 16; Figuren 8-11 * | 1 | |
| D,A | DE-A-1 944 658 (RABEWERK H. CLAUSING) | | |
| D,A | DE-C- 922 259 (W. SCHMITZER et al.) | | |

RECHERCHIERTE SACHGEBIETE (Int. Cl. ³)

A 01 B 11/00
A 01 B 49/00

Der vorliegende Recherchenbericht wurde für alle Patentansprüche erstellt.

| Recherchenort BERLIN | Abschlußdatum der Recherche 24-06-1983 | Prüfer SCHOFER G |
|---|---|---|